Europäisches Patentamt

European Patent Office

Office européen des brevets

(19)

(11) Publication number: **0 300 606**

**A2**

(12) **EUROPEAN PATENT APPLICATION**

(21) Application number: 88305238.3

(51) Int. Cl.⁴: **H04L 11/16** , **H04L 11/08**

(22) Date of filing: 08.06.88

(30) Priority: 22.07.87 GB 8717366

(43) Date of publication of application:
**25.01.89 Bulletin 89/04**

(84) Designated Contracting States:
**DE FR IT**

(71) Applicant: GEC-Marconi Limited
The Grove Warren Lane
Stanmore Middlesex HA7 4LY(GB)

(72) Inventor: Russell, John
27, Skylark Walk
Chelmsford Essex, CM2 8BA(GB)

(74) Representative: Tolfree, Roger Keith
The General Electric Co. p.l.c. Patent
Department GEC-Marconi Research Centre
West Hanningfield Road
Great Baddow, Chelmsford Essex CM2
8HN(GB)

(54) **Ring shaped local area network.**

(57) A ring for circulating multiple packets each containing control information and data such as digitised audio, includes a monitor system for preventing the unwanted accumulation of "full" packets in the ring which have already circulated once and have consequently fulfilled their function. Each node normally cancels all packets it has originated, after one circulation of the ring. In case this system breaks down, a monitor node sets "on" a monitor flag in all the packets it receives and re-transmits and cancels any packets it receives which have failed to have been cancelled by the other nodes and in which the monitor flag is consequently still "on".

Fig.1A.

Fig.1B.

EP 0 300 606 A2

## Ring-Shaped Local Area Network

This invention relates to a local area network comprising a multiple node ring, which is particularly useful for the communication of digitised audio in aircraft.

As described in our copending British Patent Application No. 8717364 (Reference I/7415/ABA), we have disclosed such a ring in which multiple packets of a common length are circulated, each active node comprising a packet-long register permanently connected in the ring, the node having means for labelling each packet it transmits as either full or empty and having means for testing whether the packet being received is full or empty in accordance with the said labelling, and means for preventing the transmission of a packet of new data by that node unless the packet as received is empty. A ring having this protocol is found to be particularly well-suited to the transmission of digitised audio between different stations at the nodes, for example between operators and radio receivers and transmitters.

In such a ring, or indeed in any local area network comprising a multiple node ring for circulating multiple packets, it is only necessary for a packet to circulate once around the ring before it is written over and its data destroyed. Usually, the ring protocol is such that the originating node is the node which destroys the information after one circuit, or allows the information to be written over by subsequent nodes. This regulatory process is necessary to avoid the saturation of the ring with full packets which prevent the nodes from transmitting information into the ring. The information as to whether a packet is full or empty, i.e. whether it should be preserved or may be written over, is usually contained in one or more control bits of the packet. A problem with such a protocol is that an error in the control bit or bits renders ineffective the regulatory method described, allowing one or more packets to circulate indefinitely, causing the ring to become inefficient.

According to the invention, a local area network comprises a multiple node ring for circulating multiple packets each containing a monitor flag and the address of its originating node, each node having means for setting the monitor flag of all packets it transmits to "off" and for cancelling, after one circulation of the ring, all packets it originates, at least one node also having monitor means which sets "on" the monitor flag of all packets it receives and re-transmits, and cancels any packets it receives which have failed to have been cancelled by the other nodes and in which the monitor flag is consequently "on".

Preferably, each node has means for labelling each packet it transmits as either "full" or "empty", and means for testing whether the packet being received is "full" or "empty" in accordance with the said labelling, and means for preventing the writing of data into that packet by that node for transmission unless the packet as received is "empty", and the said monitor means performs the said cancellation by labelling that packet as "empty", enabling that packet to be written over at a subsequent node.

Preferably, each active node comprises a packet-long register permanently connected in the ring, and this register is preferably a shift register. Conveniently, the packet-long register is a receive register which may bypass a packet-long transmit register.

In order that the invention may be better understood, a preferred embodiment will now be described, by way of example only, with reference to the accompanying diagrammatic drawings in which:

Figure 1 is a block diagram of one node of a ring embodying the invention;

Figure 2 is a simplified block diagram of part of the node of Figure 1, illustrating the manner in which the ring is accessed and the power-up procedure;

Figure 3 is a simplified block diagram of part of the node of Figure 1, illustrating the manner in which data are clocked into and out of receive and transmit registers at the node;

Figure 4 illustrates a dual-redundant contra-rotating ring having four nodes embodying the invention;

Figure 5 illustrates a switching system incorporated at each node of the ring of Figure 4;

Figure 6 is a block diagram of apparatus at one of the nodes of a ring for effecting multiple simultaneous channel reception of audio signals from several nodes of the ring: and

Figure 7 is a waveform diagram illustrating the operation of the apparatus of Figure 6.

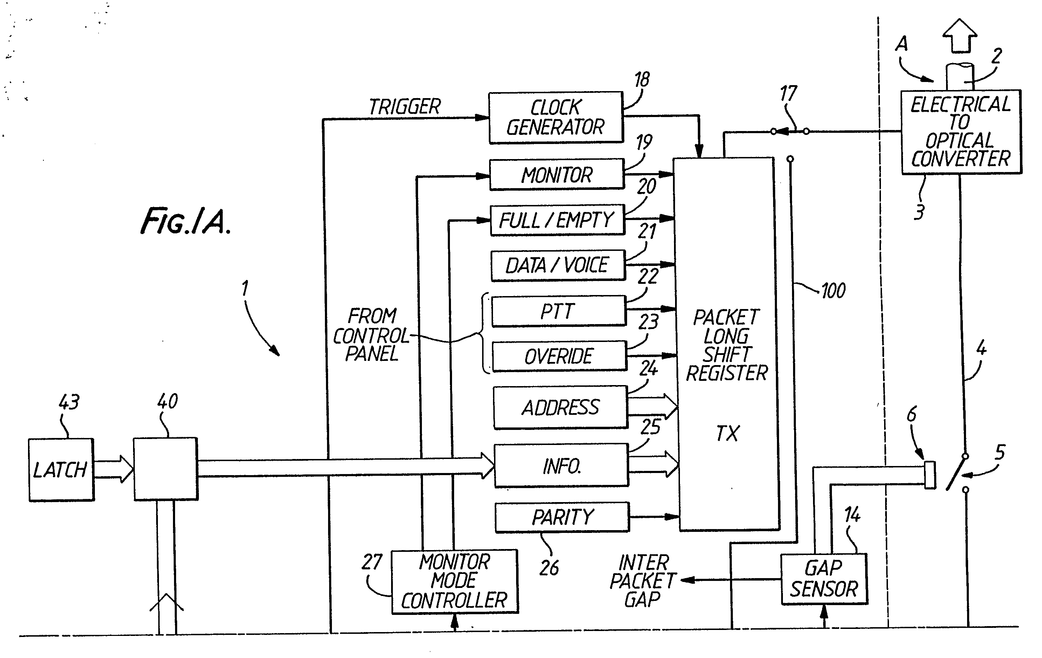

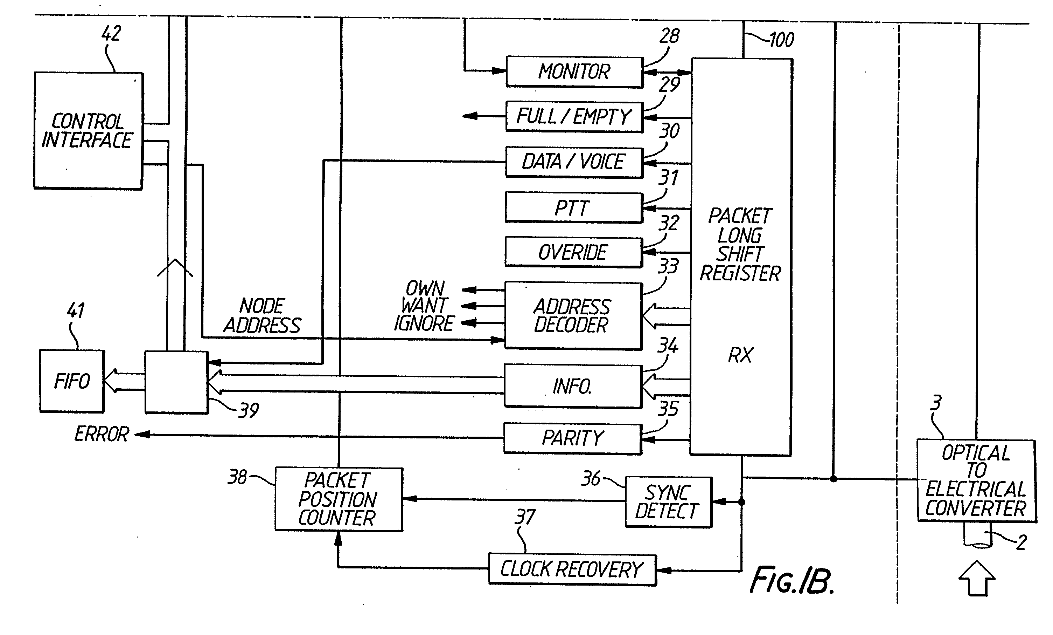

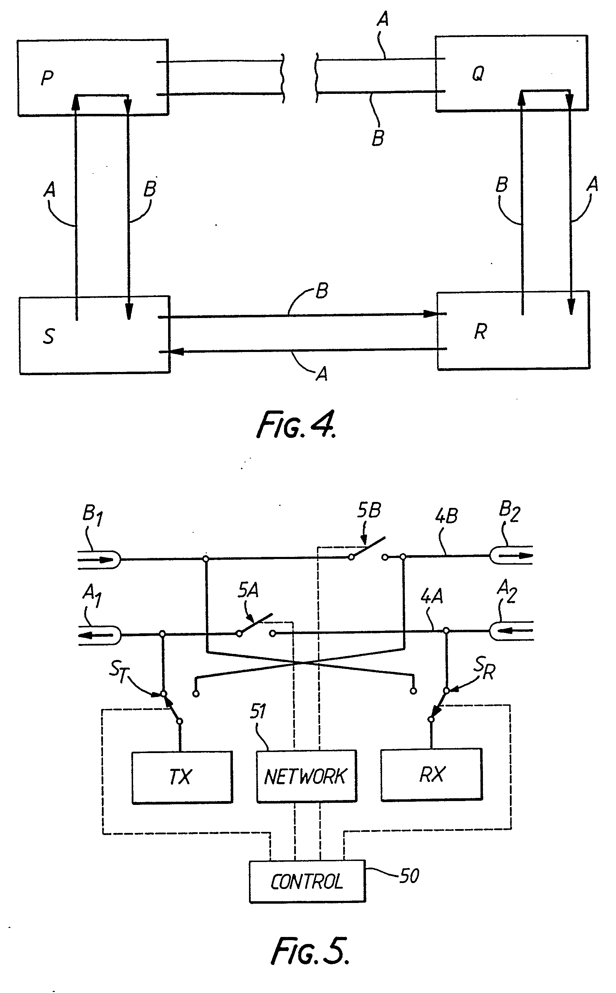

A dual-redundant, contra-rotating ring-shaped local area network for an aircraft communications control system transmits both digitised audio signals and control data in small packets from node to node. In the present example shown in Figure 4, the number of nodes is 4, interconnected by the two rings A,B of which only ring A is normally connected. The four nodes P,Q,R and S are each of the type illustrated in Figure 1, of which the portion to the right hand side of the broken vertical line constitutes the portion of the ring near the node, and the portion to the left hand side represents the means of accessing the ring at that node.

The serial data transfer between nodes is achieved by way of a multi-mode optical fibre 2 which is terminated by 9mm SMA connectors. A pair of electrical to optical converters 3 constitute the interface at the node with the optical fibre 2, and operate at an optical wave length of for example 850nm, 1300nm or 1550nm. The bit rate of the ring is 20 Megabits per second with a tolerance of +/- 5 kilobits per second, and the transmission coding method for serial data transfer between nodes conforms to "Manchester II biphase".

Packets of equal length, and equal in number to the number of active nodes 1, circulate in the ring. In effect, each packet occupies a slot and is separated by an inter-slot gap from the next packet. Each slot occupies a space of 28 x 8 bit bytes, i.e. 224 bits.

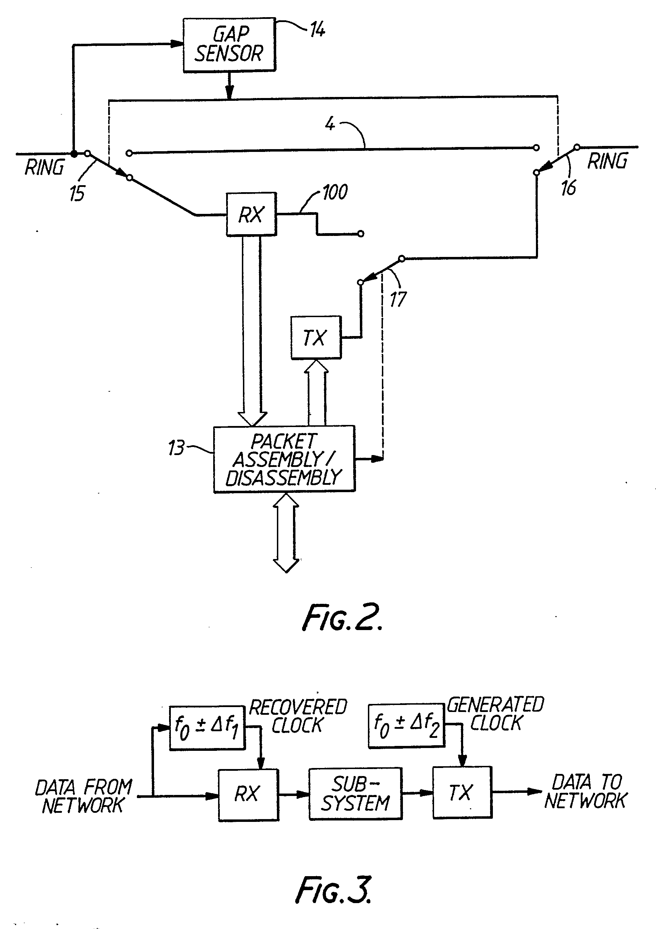

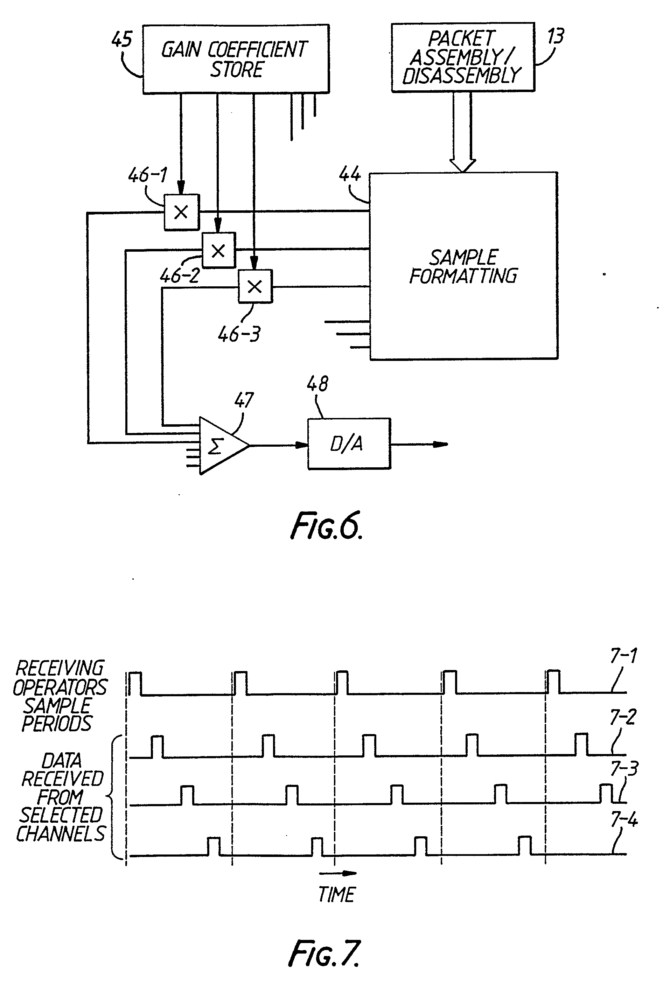

Each node comprises two shift registers, each precisely one packet in length, functioning as a receive register RX and a transmit register TX. Register RX bypasses register TX by means of a wire 100 and a switch 17, so that data is clocked selectively either from the receive register RX or from the transmit register TX. A packet assembly/disassembly section 13 (Figures 3 and 6), represented by the portion of Figure 1 to the left hand side of the shift registers RX, TX, when required, reads the data from the receive register and writes data in the same format into the transmit register for transmission onto the ring.

The packet format is as follows. The 28 bytes of each packet are divided into 4 bytes of overhead, known as the header message, and 24 bytes of information, either in the form of digitised audio or of control data. The first overhead byte is reserved for the synchronisation of packets, and is read by the synchronisation detector 36. The second overhead byte forms a control field, of which the 8 bits include a monitor bit, a full/empty bit, a data/voice bit, a transmit/receive PTT bit, an override bit and a parity bit, whose functions will be described below, and which are detected by corresponding logic units 28 to 32 and 35. The third of the four overhead bytes contains a binary code indicating the address of the originating node, i.e. the node from which the packet was transmitted onto the ring, and is detected by an address decoder 33. The fourth of the overhead bytes contains a special address whose purpose is not essential to an understanding of the invention.

The packet assembly/disassembly section 13 also comprises corresponding units 19 to 24 and 26 for setting the overhead bytes of the transmit register TX.

Voice packets and data packets are distinguished by the setting of the data voice bit. The information section of either type of packet is read by an information reader 34, and is written into the transmit register by a corresponding information write unit 25. The information section of a voice packet contains 192 bits of digitally coded audio amounting to an elapsed time of not greater than two milliseconds. The information field in data packets provides the facility for selection, control and tuning of radios and encryptors at corresponding nodes of the network, or for down-loading built-in test information (BITI) or for the reconfiguration of a damaged ring and the reallocation of the monitor node, which functions will be described in greater detail below.

Data buses carry the information bytes from the receive register RX to the information reader 34 and hence to the information write units 25 by way of two switches 39, 40 and a control interface 42. Where information is required to be read out from the packet assembly/disassembly section 13 to exterior apparatus, for example to the headset of a pilot, the information is bussed to an output FIFO register 41. Where information is required to be transmitted from exterior apparatus onto the ring, it is bussed from a latch 43 through the switch 40 to the information write unit 25.

The medium access method, and power-up procedure will now be described. When the apparatus associated with the node 1 is switched off, an electric wire 4 shunts the remaining electrical apparatus at the node, an electric switch 5 being closed. Data on the ring is then transferred between the optical to electrical converters 3 with substantially no delay. When the apparatus is switched on, a gap sensor 14 (Figures 1 and 2), responsive to a bit rate detector 6, searches for a gap between packets. When an inter-packet gap is found, it is signalled to the control interface 42 which causes the shunt path to be broken by opening the electric switch 5 and by bringing the remainder of the electrical apparatus into operation. With reference to Figure 2, this change, from an inactive state to an active state, is illustrated schematically by the movement of switches 15 and 16 from positions at which the wire 4 is connected into ring A, and the positions as illustrated in which the receive and transmit registers are connected instead in the ring A.

The transmission of a packet from the transmit register TX is controlled so that it extends an inter-slot gap. This avoids any corruption of the data already on the ring. Similarly, for power-off, the switching process is reversed during an inter-slot gap.

The clocking of the transmit and receive registers will now be described. In a ring which may have anything from a few to a hundred or more nodes, and which operates at a high bit rate, clocking demands particular care. In the preferred form of the invention, the receive clock is data-locked i.e. the clock for clocking data into the receive register RX is recovered from the incoming data stream. This is achieved by a clock recovery unit 37, using conventional techniques. The transmit clock, however, is free-running, thus avoiding jitter which would otherwise occur between clocks of slightly different frequency. In order to avoid data bunching within nodes and the consequent loss of some data, the transmission of data from the transmit register TX is started by a trigger provided by a packet position counter 38 which monitors the arrival of a predetermined bit of the packet into the receive register RX. Thus the transmit clock generator 18 is triggered by a fixed point in the received packet. This is illustrated in Figure 3, in which the errors $\Delta$ F1 and $\Delta$F2 of the receive and transmit clock generators respectively, 37 and 18, are not equal, and the generated clock is independent from the recovered clock.

The normal operation of the ring will now be described. All the packets are clocked in sequence into the receive register RX. The full/empty bit is monitored by the corresponding unit 29. If the packet is full, the originating address is compared by the address decoder 33 with the address of the node, provided by the control interface 42. The address decoder 33 then provides one of three outputs: "own", "want" or "ignore", depending respectively on whether the packet originated from the same node, the packet originated from an address with which the node wishes to communicate, and the packet originated from a node which is to be ignored. If the packet is "full and the address decoder 33 output is "ignore" or "want", then the switch 17 connects the receive register RX output via wire 100 to the ring, so that it acts as a repeater in the ring (with a delay), re-transmitting the packet unamended (except possibly for the monitor bit, to be described below). If the address decoder output is "ignore", the information is not read from the register, but if it is "want" the information is read by the information read unit 34 and bussed to the FIFO unit 41.

If the packet is "full" but the address decoder 33 output is "own", the switch 17 connects the transmit register TX instead to the ring, and the packet stored in the receive register RX is abandoned, to be overwritten by the next incoming packet. The transmit register TX transmits either a new, "full" packet or a "dummy" packet with the full/empty bit set to "empty" for subsequent destruction at the next node of the ring. The purpose of destroying "own" packets is to prevent packets being transmitted more than once around the ring.

Packets found to be "empty" are treated in the same way as "own" packets: a new "full" packet, or, if no packet is awaiting transmission, an "empty" dummy packet is transmitted by the transmit, register TX. The original "empty" packet is abandoned in the receive register RX.

In order to prevent a buildup on the ring of packets which have in some way had their source address damaged and hence have been disowned by their originating node, damaged packets are monitored. This is achieved by appointing one of the nodes on the ring as a monitor node. All the nodes are capable of being the monitor node, and the monitor node is assigned as the first node on the ring to be powered up. However, should this node fail, a restart procedure is provided to reassign the monitor node function.

A monitor mode controller 27 controls the monitor function; its input is taken from a monitor read/write unit 28 associated with the monitor bit of the receive register RX. The monitor mode controller is capable of setting the monitor bit of either of the registers RX, TX and the full/empty bit of the transmit register TX.

Assuming that the node 1 illustrated in Figure 1 is the monitor node, the monitor mode controller 27 ensures that the monitor bit of all the packets transmitted from either register is set on. If any packet arriving at the monitor node is found to have its monitor bit set on, thus indicating that it has failed to have been removed by its originating node, then that packet shall be destroyed, by setting the full/empty bit to "empty". The packet will be overwritten in the receive register of the next node in the ring.

The PTT and override functions, demanded by switches on a control panel associated with the node, modify the manner in which packets are communicated between particular nodes, depending for example on the particular facility that an operator requires. Built in test information (BITI) shall be transmitted onto the ring network from any node when it is requested via a data packet from the network.

The dual redundancy of the ring network will now be described with reference to Figures 4 and 5. Under normal operation, only one of the contrarotating rings A, B is used. However, in case a node should fail, or a portion of a ring between nodes should fail, then means are provided for the dynamic reconfiguration of a ring. With reference to Figure 5, each ring A,B has, in the region of the node illustrated, an electric wire 4A.4B interconnecting (via optical to electrical converters 3, Fig. 1) the optical fibre portions A1, A2: B1, B2. These wire connections may be broken by switches 5A, 5B, each corresponding to switch 5 of Figure 1, under the control of a network unit 51 operated by signals from a node control unit 50. The receive register RX is connectable, by a two-way switch $S_R$ controlled by the control unit 50, by further wires either to the wire 4B on the fibre portion B1 side of the switch 5B or to the wire 4A on the fibre portion A2 side of the switch 5A. Correspondingly, the transmit register TX is connectable, by a two-way switch $S_t$ controlled by the control unit 50, by further wires either to the wire 4B on the fibre portion B2 side of the switch 5B or to the wire 4A on the fibre portion A1 side of the switch 5A. Under normal operation, as illustrated in Figure 1, only ring A is used, ring B being redundant. In this configuration, the switches $S_T$ and $S_R$ connect both the registers to the wire 4A of ring A; as shown in Figure 5.

Each node's control unit 50 checks the status of "loopback" control bits in the packets it receives, to determine whether it is being requested by another node to reconfigure itself so as to "loop back" from ring A to ring B (or vice versa, if the packets are received from ring B). In the event that a loop back is required, the switch $S_T$ is changed so as to connect the transmit register TX to the other ring, which in the illustrated example is to ring B, on the fibre portion $B_2$ side. This causes a loop back from fibre portion $A_2$ via the registers RX and TX to fibre portion $B_2$.

Loop back would occur, as illustrated in Figure 4, in the event of a fault between nodes P and Q in a network consisting of four nodes P,Q,R and S.

The fault is remedied by reconfiguring the loop as shown, having loopbacks at nodes P and Q. This is achieved as follows. Node Q fails to detect a signal from node P, or detects a constant stream of incorrect data from node P, and accordingly selects its own loopback switch so as to receive data from ring B instead of ring A, transmits a reconfiguration packet (with the "loopback" bits set appropriately) to node R, and waits a short time for a response from node R. Node R relays this reconfiguration packet to node S which relays a corresponding packet to node P. Thus the procedure continues around the ring, until node P detects a failure to respond, at which point the control unit 50 of node P changes the appropriate loopback switch to connect its transmit register to ring B. This process takes no longer than one millisecond.

If as a result of the reconfiguration process it is found that a fault has occurred in a node rather than a failure of a fibre optic link, then that node is permanently switched out from the network i.e. it is bypassed (e.g. by the switches 5A,5B closing), and the loopback switches are reset to their original positions. This process takes no longer than 5 milliseconds.

It is often necessary for an operator, such as a pilot, to listen to several channels simultaneously. It is of course essential to ensure that such simultaneous channel reception does not get jumbled. Because of the dynamic nature of the network slot allocation, a major frame structure with clearly defined start and finish points is not practicable. Instead, each node generates its own frame period using the interval between its own samples, i.e. its own sample epoch. This is illustrated in Figure 7, in which the packets transmitted by the operator's node are shown as pulses in waveform 7-1, and those received from the selected channels, i.e. from selected nodes, are represented as corresponding pulses on three different waveforms 7-2, 7-3 and 7-4. The receiving node then assumes that all the packets from the network that appear within its own sample epoch occurred at the same instance. As shown in Figure 7, each group of three packets between adjacent pairs of broken lines are assumed to have occurred at the same instant. Assuming, for example, that each audio packet contains one sample, then for a 12kHz sample rate each node generates a packet every 83 microseconds.

With reference to Figure 6, the samples received from the packet assembly/disassembly section 13 are stored over a period of one sample epoch in a sample formatting unit 44. The sample formatting unit 44 provides a parallel output consisting of one output channel for each input channel, and each output channel is gain-adjusted in units 46-1, 46-2, 46-3 etc. by gain coefficients taken from a gain coefficient store 45. The gain-adjusted outputs are then summed in a summing unit 47 whose digital output is converted to an analogue audio signal in an digital-to-analogue converter 48.

## Claims

1. A local area network comprising a multiple node ring (2) for circulating multiple packets each containing a monitor flag and the address of its originating node, each node having means (27,19) for setting the monitor flag of all of the packets it transmits "off" and for cancelling, after one circulation of the ring, all packets it originates, at least one node also having monitor means (27,19) which sets "on" the monitor flag of all packets it receives and re-transmits and cancels any packets it receives which have failed to have been cancelled by the other nodes and in which the monitor flag is consequently "on".

2. A local area network according to claim 1, wherein each node has means (20) for labelling each packet it transmits as either "full" or "empty", and means (29) for testing whether the packet being received is "full" or "empty", in accordance with the said labelling, and means for preventing the transmission of a packet of new data by that node unless the packet as received is "empty", and the monitor means (27) performs the said cancellation by labelling the packet as "empty" whereby the packet may be written over at a subsequent node.

3. A local area network according to claim 1, wherein the said monitor flag consists of one control bit of each packet.

4. A local area network according to claim 1, wherein each active node comprises a packet-long register permanently connected in the ring.

5. A local area network according to claim 4, wherein the packet-long register is a receive register which is connected in parallel with a packet-long transmit register.

6. A local area network according to claim 4 or 5, wherein the or each register is a shift register.

Fig.IA.

EP 0 300 606 A2

Fig./B.

Fig.2.

Fig.3.

FIG. 4.

FIG. 5.

**Fig.6.**

**Fig.7.**